# FASCICULE DE BREVET EUROPEEN

(11) **EP 3 805 132 B1**
(45) Date de publication et mention de la délivrance du brevet: **08.06.2022**
(21) Numéro de dépôt: 20200015.4
(22) Date de dépôt: 05.10.2020
(51) Int. Cl.: B65G 7/12

(54) **MOYEN DE PRÉHENSION DESTINÉ À DES CHAUFFE-EAUX ET ANALOGUES**
GREIFVORRICHTUNG FÜR WARMWASSERBEREITER UND ÄHNLICHES
GRIPPING MEANS INTENDED FOR WATER HEATERS AND SIMILAR

(30) Priorité: 09.10.2019 FR 1911176
(43) Date de publication de la demande: 14.04.2021
(73) Titulaire: Viessmann Werke GmbH & Co. KG, 35108 Allendorf/Eder (DE)
(72) Inventeur: MANGIN, Arnaud, 57530 COURCELLES-CHAUSSY (FR); SCHILLER, Manuel, 57385 TRITTELING REDLACH (FR)
(74) Mandataire: Cabinet Nuss

(56) Documents cités:
- DE-U1- 20 318 060
- US-A1- 2007 035 139
- US-A1- 2012 286 530

## Description

La présente invention concerne le domaine des biens d'équipement, en particulier les équipements domestiques et industriels en lien avec le stockage de liquide chaud ou froid, et notamment les chauffe-eaux à accumulation.

Dans ce contexte, l'invention a pour objet un moyen de préhension destiné faciliter le transport, la manutention et/ou la pose d'un contenant isolé thermiquement, notamment un ballon d'accumulation d'eau chaude tel que présent sur les dispositifs susvisés.

De nombreuses constructions de tels contenants sont déjà connues de l'état de la technique.

Généralement, ils comprennent essentiellement un réservoir cylindrique, préférentiellement métallique, une paroi cylindrique entourant ledit réservoir et formant manchon ou enveloppe d'habillage, des couvercles ou capots de fermeture supérieur et inférieur obturant les ouvertures opposées dudit manchon ou de ladite enveloppe et un matériau isolant moussé remplissant sensiblement tout le volume interstitiel entre le réservoir et le manchon ou l'enveloppe avec ses deux couvercles, le couvercle inférieur étant équipé de pieds destinés à supporter le contenant après installation, comme le contenant décrit dans le préambule de la revendication 11.

Bien entendu, ce contenant est également équipé de lignes ou d'embouts d'alimentation en liquide, d'évacuation de liquide, de détecteur de niveau, d'évents, de trop-pleins ou d'accessoires analogues en fonction de sa nature et de son application. En outre, il peut aussi intégrer une résistance chauffante avec son électronique de commande et sa connectique, lorsqu'il s'agit d'un chauffeeau électrique. D'autres variantes incluant une pompe à chaleur existent également.

Le plus souvent le réservoir présente une forme cylindrique avec des calottes supérieure et inférieure en forme de dômes hémisphériques aplatis.

Dans la plupart des constructions actuelles de ce type de contenant, le transport dans une position horizontale et l'installation verticale sont facilités par des prises intégrées, sous la forme de cavités, sur les bords inférieur et supérieur de l'ensemble à installer.

Toutefois, en raison notamment du poids élevé des ensembles à installer, et/ou des espaces restreints dans lesquels on opère (corridors, pièces ou escaliers étroits) ces prises s'avèrent peu pratiques sur le terrain et il existe un réel besoin de mettre au point et de fournir une alternative plus performante et ergonomique tout en préservant l'esthétique du produit final sans en compliquer le processus de fabrication ou de manipulation sur les chantiers ou au cours du transport. US 2012/0286530 A1 et US 2007/0035139 A1 divulguent un moyen de préhension comprenant une poignée ou entretoise reliant deux parois latérales verticales montées sur un support plan ou sensiblement plan, ledit support plan ou sensiblement plan présentant sur sa face inférieure opposée à celle recevant lesdites parois latérales au moins un moyen d'ancrage saillant dudit moyen de préhension.

La présente invention a pour but de proposer une solution efficace et facile à mettre en œuvre au problème exposé ci-dessus.

A cet effet, elle a pour objet un moyen de préhension, de type poignée, destiné à être scellé pour son utilisation ultérieure dans un matériau durcissable faisant partie de l'objet à saisir formé (en l'occurrence l'isolant thermique sous forme de mousse d'un réservoir à installer) quand ce matériau moussé est durci, comprenant une poignée ou entretoise reliant deux parois latérales verticales montées sur une base ou un support plan ou sensiblement plan, ledit support plan ou sensiblement plan présentant sur sa face plane inférieure opposée à celle recevant lesdites parois latérales au moins un moyen d'ancrage saillant ou proéminent dudit moyen de préhension dans ledit matériau durcissable, le ou les moyens d'ancrage étant réalisés sous la forme d'un plateau horizontal parallèle ou sensiblement parallèle au support plan ou sensiblement plan et relié à ce dernier par au moins une entretoise verticale.

Ce moyen est habituellement fabriqué à part comme une pièce en plastique injecté, par exemple en PP, PP GF 20 ou PA6 GF 15 pour ne citer que quelques exemples.

Il est inséré au moment de sa mise en place, avant l'arrivée de la mousse encore liquide et peu expansée à des endroits spécifiquement prévus de l'ensemble de l'appareillage à installer, de préférence par paires et, dans un mode de réalisation avantageux, en coopérant mécaniquement provisoirement avec la structure dans laquelle il est ancré avant d'être définitivement scellé lorsque la mousse (le matériau durcissable) a pris tout le volume disponible et s'est figée en durcissant.

La présente invention a également pour objet un contenant isolé thermiquement, en particulier réservoir de ballon d'eau chaude, comprenant essentiellement un réservoir cylindrique, préférentiellement métallique, une paroi cylindrique entourant ledit réservoir et formant manchon ou enveloppe d'habillage, des couvercles ou capots de fermeture supérieur et inférieur obturant les ouvertures opposées dudit manchon ou de ladite enveloppe et un matériau moussé thermiquement isolant remplissant sensiblement tout le volume interstitiel entre le réservoir et le manchon ou l'enveloppe avec ses deux couvercles.

Selon l'invention ledit contenant est caractérisé en ce que lesdits couvercles inférieur et supérieur sont munis chacun d'au moins une paire de deux moyens de préhension diamétralement opposés ou sensiblement diamétralement opposés pour permettre le transport horizontal dudit contenant par au moins deux installateurs, lesdits moyens de préhension étant réalisés selon la présente invention.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue 3D en perspective d'un moyen de préhension pour contenant thermiquement isolé selon un mode de réalisation préféré de l'invention ;
[Fig. 2] est une vue latérale du moyen de préhension de la figure 1 ;
[Fig. 3] est une vue en coupe (selon un plan vertical comprenant l'axe D-D de la figure 2) du moyen de préhension de la figure 2 ;
[Fig. 4] est une vue de dessus dudit moyen de préhension selon l'invention ;
[Fig. 5] est une vue 3D da la face d'extrémité supérieure d'un contenant selon l'invention muni d'une paire de moyens de préhension selon les figures précédentes et diamétralement opposés ;
[Fig. 6] est une vue en coupe selon l'axe A-A de la figure 5 ; et
[Fig. 7] est une vue en coupe selon l'axe B-B de la figure 5 ;
[Fig. 8] est une vue 3D da la face d'extrémité inférieure d'un contenant selon l'invention muni d'une paire de moyens de préhension selon les figures précédentes et diamétralement opposés;
[Fig. 9] est une vue en coupe selon l'axe A-A de la figure 8 ; et
[Fig. 10] est une vue en coupe selon l'axe B-B de la figure 8.

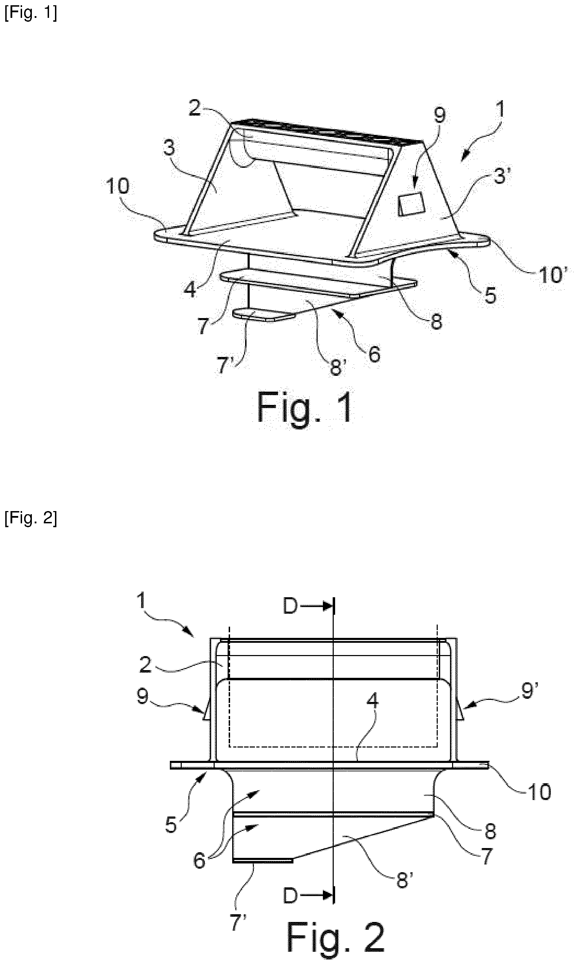

Comme on peut le voir sur la figure 1, l'invention a tout d'abord pour objet un moyen de préhension 1 destiné à être scellé pour son utilisation ultérieure dans un matériau durcissable (en général un matériau de type mousse qui en expansant remplit l'espace disponible puis durcit) faisant partie de l'objet à saisir formé quand ce matériau moussé 16 est durci, comprenant une poignée 2 ou entretoise reliant deux parois latérales verticales 3, 3' montées sur un support plan ou sensiblement plan 4, ledit support plan ou sensiblement plan 4 présentant sur sa face inférieure 5 opposée à celle recevant lesdites parois latérales 3, 3' au moins un moyen d'ancrage 6 saillant dudit moyen de préhension 1 dans ledit matériau durcissable.

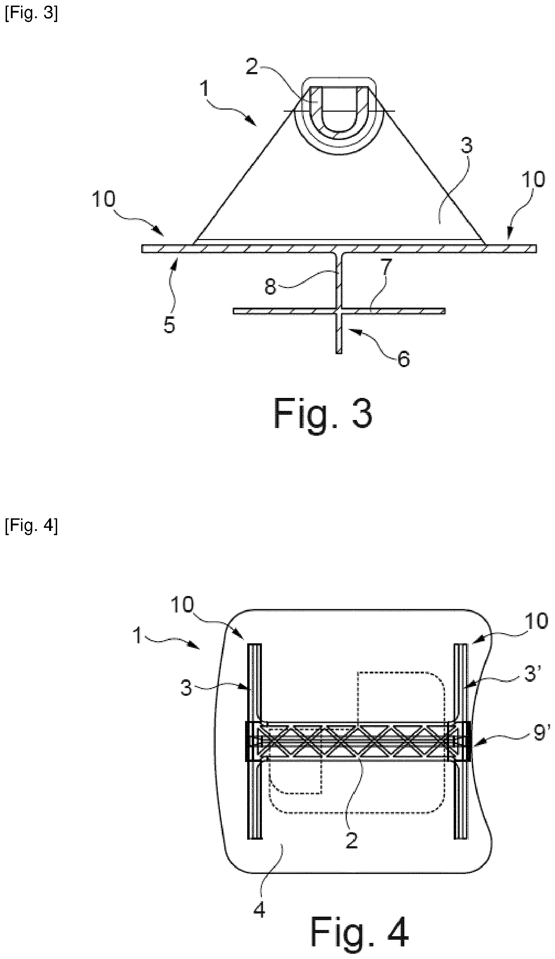

Comme on le voit particulièrement bien sur les figures 1 à 3, le moyen de préhension 1 selon l'invention est caractérisé en ce que le ou les moyens d'ancrage 6 sont réalisés sous la forme d'un plateau horizontal 7 parallèle ou sensiblement parallèle au support plan ou sensiblement plan 4 et relié à ce dernier par au moins une entretoise verticale 8.

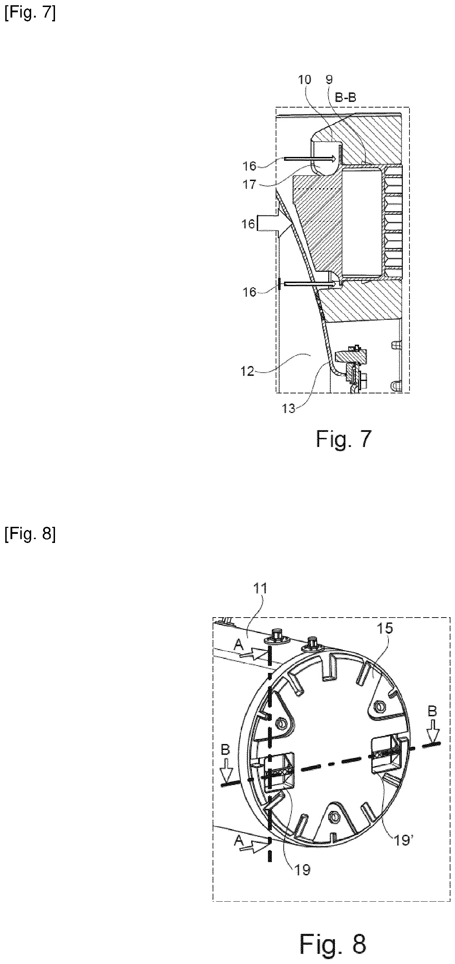

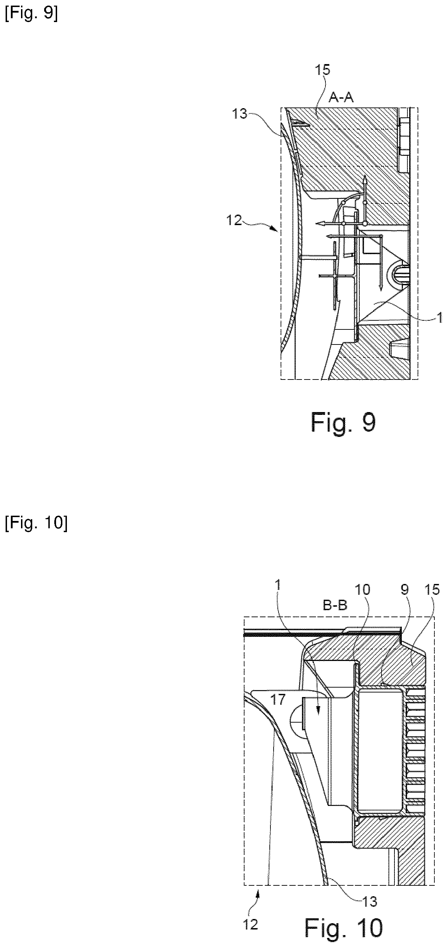

De préférence, pour notamment plus de solidité et de résistance à l'arrachement, le moyen de préhension 1 selon l'invention est encore caractérisé en ce que ledit plateau horizontal 7 est prolongé vers le bas, c'est-à-dire dans la direction du matériau durcissable où ledit moyen de préhension 1 est ancré par au moins un second plateau horizontal 7' de dimensions inférieures à celles du plateau horizontal 7 qu'il prolonge par une seconde entretoise verticale 8' de préférence en forme de trapèze ou d'aileron. Cette géométrie permet d'atteindre le but fixé tout en épousant la forme du réservoir 12 dudit contenant (cf. les figures 7 et 10).

Avantageusement, et comme il ressort de la figure 1 le moyen de préhension 1 selon l'invention est encore caractérisé en ce que le second plateau horizontal 7' est monté sur le bord inférieur horizontal à l'extrémité de ladite entretoise verticale 8'.

Selon une autre caractéristique le ou les plateaux horizontaux 7, 7' s'étendent de part et d'autre des entretoises verticales qui les relient au support plan ou sensiblement plan 4 horizontal. Cela permet une meilleure répartition des charges ou efforts et la fabrication de pièces symétriques, ce qui est particulièrement intéressant lorsque ces pièces sont fabriquées par injection de matière plastique, tant sur le plan de la mise en œuvre que sur celui de la conception et de la réalisation des moules de la presse à injecter.

En conséquence, il est particulièrement avantageux que le ou les plateaux horizontaux 7, 7' soient ainsi de forme symétrique par rapport au plan formé par des entretoises verticales 8, 8' alignées verticalement et perpendiculaire au plan du support horizontal 4.

Selon un autre aspect, le moyen de préhension 1 selon l'invention est en outre caractérisé en ce que la poignée 2 présente au moins une face arrondie destinée à recevoir les doigts de la main de l'utilisateur. Ceci optimise la prise en main qui devient plus ergonomique avec tous les avantages qui y sont associés.

Selon une variante préférée, le moyen de préhension 1 selon l'invention est aussi caractérisé en ce que les deux parois latérales verticales 3, 3' sont chacune munies sur leur face verticale externe opposée à celle où se trouve la poignée 2 d'au moins un moyen additionnel de fixation 9 mécanique destiné à coopérer avec un moyen de fixation correspondant situé sur la pièce ou un élément rapporté de la pièce où le moyen de préhension 1 doit être monté. Cela a été illustré schématiquement par des clips en forme de coins triangulaires particulièrement bien visibles sur les figures 1, 2, respectivement 7 et 10.

Comme évoqué ci-dessus, les moyens de préhension 1 selon l'invention sont préférentiellement caractérisés en ce que le ou les moyens de fixation additionnels 9 sont des moyens de fixation par clipsage.

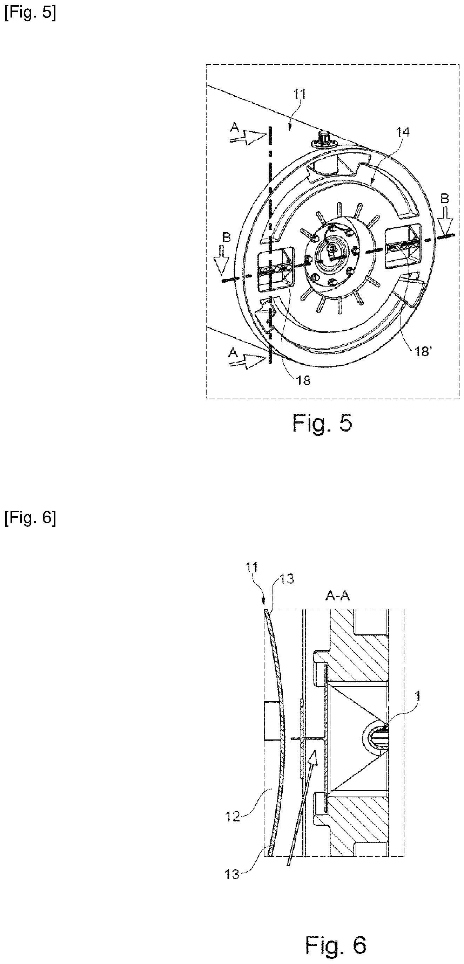

Selon un autre aspect particulièrement avantageux, le moyen de préhension 1 selon l'invention est également caractérisé en ce que le support plan ou sensiblement plan 4 présente deux parois horizontales d'appui 10 d'extrémité. Ceci est très utile pour un maintien supplémentaire et amélioré dudit moyen lors de son montage comme on peut le déduire de la figure 6, respectivement 9. Avec la pression (flèches) exercée par le matériau isolant liquide ou fluide lesdits moyens de préhension 11 restent en bonne position en attendant que ce dernier vienne les englober avant de durcir et de les sceller définitivement. Les moyens d'ancrage 6, en augmentant la surface de contact utile entre le matériau isolant moussé 16 et le moyen de préhension 1 augmente ainsi la résistance contre l'arrachement lorsqu'ils sont sollicités lors du transport ou de leur installation sur le chantier. Ce maintien et/ou cette résistance peuvent également encore être renforcés par l'ajout des moyens additionnels de fixation 9 évoqués plus haut.

Comme évoqué, le moyen selon l'invention est caractérisé en ce qu'il est réalisé en matière synthétique dans un procédé de moulage par injection, de préférence un polypropylène ou polyamide.

Enfin, la présente invention a encore pour objet un contenant 11 isolé thermiquement, en particulier réservoir de ballon d'eau chaude, comprenant essentiellement un réservoir 12 cylindrique, préférentiellement métallique, une paroi cylindrique entourant ledit réservoir 12 et formant manchon ou enveloppe 13 d'habillage, des couvercles ou capots de fermeture supérieur 14 et inférieur 15 obturant les ouvertures opposées dudit manchon ou de ladite enveloppe 13 et un matériau moussé 16 thermiquement isolant remplissant sensiblement tout le volume interstitiel 17 entre le réservoir 12 et le manchon ou l'enveloppe 13 avec ses deux couvercles, contentant 11 caractérisé en ce que lesdits couvercles inférieur 15 et supérieur 14 sont munis chacun d'au moins une paire de deux moyens de préhension 1 diamétralement opposés ou sensiblement diamétralement opposés pour permettre le transport horizontal dudit contenant par au moins deux installateurs, lesdits moyens de préhension 1 étant réalisés selon l'invention.

Grâce aux moyens de préhension 1 selon l'invention, on peut ainsi fabriquer facilement selon le procédé habituel de fabrication légèrement modifié, un contenant 11 présentant deux poignées disposées à 180° solidement ancrées et fixées dans le matériau isolant durci, ce dans le couvercle supérieur 14 et inférieur 15 permettant ainsi un transport et une manutention facilitée et sécurisée par deux ouvriers, en particulier lors d'un transport dudit contenant 11 à l'horizontal. Ceci est particulièrement utile lorsque ces contenants 11 sont de relativement grandes dimensions et peuvent dépasser les 100 ou 150 kg par pièce. Aucun montage/démontage de moyens de préhension non-intégrés et/ou outil additionnel n'est donc nécessaire pour eux. L'impact visuel est minime voire nul si les couvercles sont encore eux-mêmes cachés ou munis de caches spécifiques de finition. La diminution de l'isolation thermique au niveau desdits moyens de préhension 11 est également faible, soit de l'ordre ou inférieure à 0,1 kWh/24h en raison de l'absence locale de matériau isolant. Les couvercles supérieur 14 et inférieur 15 précités peuvent être avantageusement réalisés en polystyrène expansé dans lequel on a prévu deux cavités destinés à recevoir lesdits moyens de préhension 11.

Avantageusement, le contenant selon l'invention est encore caractérisé en ce que les moyens de préhension 1 sont intégrés dans le contenant 11 lors de l'injection d'un matériau liquide thermiquement isolant destiné à devenir, par moussage et expansion, le matériau moussé 6 thermiquement isolant après durcissement.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention défini par les revendications annexées.

## Revendications

1. Moyen de préhension (1) destiné à être scellé pour son utilisation ultérieure dans un matériau durcissable faisant partie de l'objet à saisir formé quand ce matériau moussé (16) est durci, comprenant une poignée (2) ou entretoise reliant deux parois latérales verticales (3, 3') montées sur un support plan ou sensiblement plan (4), ledit support plan ou sensiblement plan (4) présentant sur sa face inférieure (5) opposée à celle recevant lesdites parois latérales (3, 3') au moins un moyen d'ancrage (6) saillant dudit moyen de préhension (1) dans ledit matériau durcissable, le ou les moyens d'ancrage (6) étant réalisés sous la forme d'un plateau horizontal (7) parallèle ou sensiblement parallèle au support plan ou sensiblement plan (4) et relié à ce dernier par au moins une entretoise verticale (8).

2. Moyen de préhension (1) selon la revendication 1, **caractérisé en ce que** ledit plateau horizontal (7) est prolongé vers le bas, c'est-à-dire dans la direction du matériau durcissable où ledit moyen de préhension (1) est ancré par au moins un second plateau horizontal (7') de dimensions inférieures à celles du plateau horizontal (7) qu'il prolonge par une seconde entretoise verticale (8') de préférence en forme de trapèze ou d'aileron.

3. Moyen de préhension (1) selon la revendication 2, **caractérisé en ce que** le second plateau horizontal (7') est monté sur le bord inférieur horizontal à l'extrémité de ladite entretoise verticale (8').

4. Moyen de préhension (1) selon les revendications 1 à 3, **caractérisé en ce que** le ou les plateaux horizontaux (7, 7') s'étendent de part et d'autre des entretoises verticales qui les relient au support plan ou sensiblement plan (4) horizontal.

5. Moyen de préhension (1) selon l'une quelconque des revendications 1 à 4, **caractérisé en ce que** le ou les plateaux horizontaux (7, 7') sont de forme symétrique par rapport au plan formé par des entretoises verticales (8, 8') alignées verticalement et perpendiculaire au plan du support horizontal (4).

6. Moyen de préhension (1) selon l'une quelconque des revendications 1 à 5, **caractérisé en ce que** la poignée (2) présente au moins une face arrondie destinée à recevoir les doigts de la main de l'utilisateur.

7. Moyen de préhension (1) selon l'une quelconque des revendications 1 à 6, **caractérisé en ce que** les deux parois latérales verticales (3, 3') sont chacune munies sur leur face verticale externe opposée à celle où se trouve la poignée (2) d'au moins un moyen additionnel de fixation (9) mécanique destiné à coopérer avec un moyen de fixation correspondant situé sur la pièce ou un élément rapporté de la pièce où le moyen de préhension (1) doit être monté.

8. Moyen de préhension (1) selon la revendication 7, **caractérisé en ce que** le ou les moyens de fixation additionnels (9) sont des moyens de fixation par clipsage.

9. Moyen de préhension (1) selon l'une quelconque des revendications 1 à 8, **caractérisé en ce que** le support plan ou sensiblement plan (4) présente deux parois horizontales d'appui (10) d'extrémité.

10. Moyen de préhension (1) selon l'une quelconque des revendications 1 à 9, **caractérisé en ce qu'**il est réalisé en matière synthétique dans un procédé de moulage par injection, de préférence un polypropylène ou polyamide.

11. Contenant (11) isolé thermiquement, en particulier réservoir de ballon d'eau chaude, comprenant essentiellement un réservoir (12) cylindrique, préférentiellement métallique, une paroi cylindrique entourant ledit réservoir (12) et formant manchon ou enveloppe (13) d'habillage, des couvercles ou capots de fermeture supérieur (14) et inférieur (15) obturant les ouvertures opposées dudit manchon ou de ladite enveloppe (13) et un matériau moussé (16) thermiquement isolant remplissant sensiblement tout le volume interstitiel (17) entre le réservoir (12) et le manchon ou enveloppe (13) avec ses deux couvercles, contenant (11) **caractérisé en ce que** lesdits couvercles inférieur (15) et supérieur (14) sont munis chacun d'au moins une paire de deux moyens de préhension (1) diamétralement opposés ou sensiblement diamétralement opposés pour permettre le transport horizontal dudit contenant par au moins deux installateurs, lesdits moyens de préhension (1) étant destinés à être scellés pour leur utilisation dans le matériau moussé (16) durci, et comprenant chacun une poignée (2) ou entretoise reliant deux parois latérales verticales (3, 3') montées sur un support plan ou sensiblement plan (4), ledit support plan ou sensiblement plan (4) présentant sur sa face inférieure (5) opposée à celle recevant lesdites parois latérales (3, 3') au moins un moyen d'ancrage (6) saillant dudit moyen de préhension (1) dans ledit matériau.

12. Contenant selon la revendication 11, **caractérisé en ce que** les moyens de préhension (1) sont réalisés selon l'une quelconque des revendications 1 à 10.

13. Contenant selon la revendication 11 ou 12, **caractérisé en ce que** les moyens de préhension (1) sont intégrés dans le contenant (11) lors de l'injection d'un matériau liquide thermiquement isolant destiné à devenir, par moussage et expansion, le matériau moussé (6) thermiquement isolant après durcissement.

## Patentansprüche

1. Greifer (1), der dazu bestimmt ist, für seine spätere Verwendung in ein härtbares Material eingekapselt zu werden, das Teil des zu ergreifenden Objekts ist, wenn dieses geschäumte Material (16) gehärtet ist, umfassend einen Griff (2) oder eine Querstrebe, der bzw. die zwei vertikale Seitenwände (3, 3') verbindet, die auf einem ebenen oder im Wesentlichen ebenen Sockel (4) montiert sind, wobei der ebene oder im Wesentlichen ebene Sockel (4) an seiner unteren Fläche (5), die der die Seitenwände (3, 3') aufnehmenden gegenüberliegt, mindestens ein Verankerungsmittel (6) aufweist, das von dem Greifer (1) in das härtbare Material vorragt, oder wobei die Verankerungsmittel (6) unter der Form einer horizontalen Platte (7) ausgeführt sind, die parallel oder im Wesentlichen parallel zu dem ebenen oder im Wesentlichen ebenen Sockel (4) verläuft und über mindestens einen vertikalen Quersteg (8) mit Letzterem verbunden ist.

2. Greifer (1) nach Anspruch 1, **dadurch gekennzeichnet, dass** die horizontale Platte (7) nach unten verlängert ist, das heißt in die Richtung des härtbaren Materials, wo der Greifer (1) über mindestens eine zweite horizontale Platte (7') verankert ist, deren Abmessungen kleiner sind als die der horizontalen Platte (7), die sie durch eine zweite vertikale, vorzugsweise trapez- oder flossenförmige Querstrebe (8') verlängert.

3. Greifer (1) nach Anspruch 2, **dadurch gekennzeichnet, dass** die zweite horizontale Platte (7') an dem unteren horizontalen Rand am Ende der vertikalen Querstrebe (8') montiert ist.

4. Greifer (1) nach einem der Ansprüche 1 bis 3, **dadurch gekennzeichnet, dass** sich die horizontale Platte oder die horizontalen Platten (7, 7') beiderseits der vertikalen Querstreben erstrecken, die sie mit dem horizontalen ebenen oder im Wesentlichen ebene Sockel (4) verbinden.

5. Greifer (1) nach einem der Ansprüche 1 bis 4, **dadurch gekennzeichnet, dass** die horizontale Platte oder die horizontalen Platten (7, 7') eine zu der von vertikalen Querstreben (8, 8'), die vertikal und senkrecht auf die Ebene des horizontalen Sockels (4) ausgerichtet sind, gebildeten Ebene symmetrische Form hat bzw. haben.

6. Greifer (1) nach einem der Ansprüche 1 bis 5, **dadurch gekennzeichnet, dass** der Griff (2) mindestens eine abgerundete Fläche hat, die dazu bestimmt ist, von den Fingern der Hand des Benutzers ergriffen zu werden.

7. Greifer (1) nach einem der Ansprüche 1 bis 6, **dadurch gekennzeichnet, dass** die beiden vertikalen Seitenwände (3, 3') jeweils an ihrer vertikalen Außenfläche, die jener gegenüberliegt, an der sich der Griff (2) befindet, mit mindestens einem zusätzlichen mechanischen Befestigungsmittel (9) versehen sind, das dazu bestimmt ist, mit einem entsprechenden Befestigungsmittel zusammenzuwirken, das an dem Teil angeordnet ist, oder einem angebrachten Element des Teils, wo der Greifer (1) zu montieren ist.

8. Greifer (1) nach Anspruch 7, **dadurch gekennzeichnet, dass** das zusätzliche oder die zusätzlichen Befestigungsmittel (9) Mittel zur Befestigung durch Klippsen ist bzw. sind.

9. Greifer (1) nach einem der Ansprüche 1 bis 8, **dadurch gekennzeichnet, dass** der ebene oder im Wesentlichen ebene Sockel (4) zwei horizontale Endstützwände (10) aufweist.

10. Greifer (1) nach einem der Ansprüche 1 bis 9, **dadurch gekennzeichnet, dass** er aus Kunststoff, vorzugsweise einem Polypropylen oder Polyamid, mittels eines Spritzgießverfahrens hergestellt ist.

11. Wärmegedämmter Behälter (11), insbesondere Heißwasser-Pufferspeicher, im Wesentlichen umfassend einen vorzugsweise metallischen zylindrischen Speicher (12), eine zylindrische Wand, die den Speicher (12) umgibt und einen Umkleidungsmantel oder eine Umkleidungsumhüllung (13) bildet, einen bzw. eine obere(n) (14) und untere(n) (15) Verschlussdeckel oder -kappe, die die gegenüberliegenden Öffnungen des Mantels oder der Umhüllung (13) verschließen, und ein wärmedämmendes geschäumtes Material (16), das im Wesentlichen das gesamte Zwischenraumvolumen (17) zwischen dem Speicher (12) und dem Mantel oder der Umhüllung (13) mit seinen bzw. ihren zwei Deckeln ausfüllt, wobei der Behälter (11) **dadurch gekennzeichnet ist, dass** der untere (15) und der obere (14) Deckel jeweils mit mindestens einem Paar zweier Greifer (1) versehen sind, die diametral oder im Wesentlichen diametral gegenüberliegen, um den horizontalen Transport des Behälters durch mindestens zwei Installateure zu gestatten, wobei die Greifer (1) dazu bestimmt sind, zu ihrer Verwendung in das gehärtete geschäumte Material (16) eingekapselt zu werden, und jeweils einen Griff (2) oder einen Quersteg umfasst, der bzw. die zwei vertikale Seitenwände (3, 3') verbindet, die auf einem ebenen oder im Wesentlichen ebenen Sockel (4) montiert sind, wobei der ebene oder im Wesentlichen ebene Sockel (4) an seiner unteren Fläche (5), die der die Seitenwände (3, 3') aufnehmenden gegenüberliegt, mindestens ein Verankerungsmittel (6) aufweist, das von dem Greifer (1) in das Material vorragt.

12. Behälter nach Anspruch 11, **dadurch gekennzeichnet, dass** die Greifer (1) nach einem der Ansprüche 1 bis 10 ausgeführt sind.

13. Behälter nach Anspruch 11 oder 12, **dadurch gekennzeichnet, dass** die Greifer (1) beim Spritzgießen eines flüssigen wärmedämmenden Materials, das dazu bestimmt ist, durch Schäumen und Expandieren nach dem Härten das wärmedämmende geschäumte Material (6) zu werden, in den Behälter (11) integriert werden.

## Claims

1. Gripping means (1) intended to be sealed for its subsequent use in a hardenable material forming part of the object to be grasped formed when this foam material (16) is hardened, comprising a handle (2) or spacer linking two vertical lateral walls (3, 3') mounted on a flat or substantially flat support (4), said flat or substantially flat support (4) having, on its bottom face (5) opposite that receiving said lateral walls (3, 3'), at least one anchoring means (6) protruding from said gripping means (1) into said hardenable material, or the anchoring means (6) being produced in the form of a horizontal plate (7) parallel or substantially parallel to the flat or substantially flat support (4) and linked thereto by at least one vertical spacer (8).

2. Gripping means (1) according to Claim 1, **characterized in that** said horizontal plate (7) is extended downwards, that is to say in the direction of the hardenable material where said gripping means (1) is anchored by at least one second horizontal plate (7') of smaller dimensions than those of the horizontal plate (7) that it extends by a second vertical spacer (8'), preferably of trapezoidal or fin form.

3. Gripping means (1) according to Claim 2, **characterized in that** the second horizontal plate (7') is mounted on the horizontal bottom edge at the end of said vertical spacer (8').

4. Gripping means (1) according to Claims 1 to 3, **characterized in that** the horizontal plate or plates (7, 7') extend on either side of the vertical spacers which link them to the horizontal flat or substantially flat support (4).

5. Gripping means (1) according to any one of Claims 1 to 4, **characterized in that** the horizontal plate or plates (7, 7') are of symmetrical form with respect to the plane formed by vertical spacers (8, 8') aligned vertically and at right angles to the plane of the horizontal support (4).

6. Gripping means (1) according to any one of Claims 1 to 5, **characterized in that** the handle (2) has at least one rounded face intended to receive the fingers of the hand of the user.

7. Gripping means (1) according to any one of Claims 1 to 6, **characterized in that** the two vertical lateral walls (3, 3') are each provided, on their outer vertical face opposite that where the handle (2) is located, with at least one additional mechanical fixing means (9) intended to cooperate with a corresponding fixing means situated on the part or an add-on element of the part where the gripping means (1) should be mounted.

8. Gripping means (1) according to Claim 7, **characterized in that** the additional fixing means (9) is or are snap-fitting fixing means.

9. Gripping means (1) according to any one of Claims 1 to 8, **characterized in that** the flat or substantially flat support (4) has two horizontal end bearing walls (10).

10. Gripping means (1) according to any one of Claims 1 to 9, **characterized in that** it is produced in a synthetic material in an injection moulding method, preferably a polypropylene or polyamide.

11. Thermally insulated container (11), in particular a hot water tank, essentially comprising a cylindrical tank (12), preferentially made of metal, a cylindrical wall surrounding said tank (12) and forming a cladding sleeve or enclosure (13), top (14) and bottom (15) closing covers or caps blocking the opposite openings of said sleeve or of said enclosure (13) and a thermally insulating foam material (16) filling substantially all the interstitial volume (17) between the tank (12) and the sleeve or enclosure (13) with its two covers, the container (11) being **characterized in that** said bottom (15) and top (14) covers are each provided with at least one pair of two diametrically opposite or substantially diametrically opposite gripping means (1) to allow said container to be transported horizontally by at least two installers, said gripping means (1) being intended to be sealed for their use in the hardened foam material (16), and each comprising a handle (2) or spacer linking two vertical lateral walls (3, 3') mounted on a flat or substantially flat support (4), said flat or substantially flat support (4) having, on its bottom face (5) opposite that receiving said lateral walls (3, 3'), at least one anchoring means (6) protruding from said gripping means (1) into said material.

12. Container according to Claim 11, **characterized in that** the gripping means (1) are produced according to any one of Claims 1 to 10.

13. Container according to Claim 11 or 12, **characterized in that** the gripping means (1) are incorporated in the container (11) during the injection of a thermally insulating liquid material intended to become, by foaming and expansion, the thermally insulating foam material (6) after hardening.
